# EUROPEAN PATENT APPLICATION

(11) **EP 3 447 906 A1**
(43) Date of publication of application: **27.02.2019**
(21) Application number: 17901342.0
(22) Date of filing: 28.11.2017
(51) Int. Cl.: H02S 20/22

(54) **MOUNTING BRACKET AND MOUNTING ASSEMBLY OF PHOTOVOLTAIC MODULE**

(30) Priority: 09.06.2017 CN 201720668022 U
(71) Applicant: Beijing Apollo Ding Rong Solar Technology Co. Ltd., Beijing 100176 (CN)
(72) Inventor: LIN, Junrong, Beijing 100176 (CN)
(74) Representative: Roman, Alexis
(86) International application number: PCT/CN2017/113237
(87) International publication number: WO 2018/223624

(57) **Abstract**

Embodiments of the present disclosure disclose a mounting bracket and a mounting assembly of a photovoltaic module. The mounting bracket includes: a bracket body; a vertical plate, whose bottom end is fixed to a top surface of the bracket body; and a transverse plate, transversely fixed to a top end of the vertical plate. A first sliding groove and a second sliding groove opposite in open direction are formed between the transverse plate, the vertical plate and the bracket body. A depth of the first sliding groove is greater than that of the second sliding groove. In the mounting bracket and the mounting assembly of the photovoltaic module provided by the embodiments of the present disclosure, the first sliding groove and the second sliding groove are formed on the bracket body by the transverse plate and the vertical plate, and the photovoltaic module may be directly mounted by way of fitting between the first sliding groove and the second sliding groove and the photovoltaic module. Therefore, the photovoltaic module is stably mounted, with the mounting time saved. Furthermore, in the mounting process, it is unnecessary to apply excessive force to the photovoltaic module, and thus fracture of the photovoltaic module may be avoided.

## Description

### TECHNICAL FIELD

Embodiments of the present disclosure relate to a solar photovoltaic module, and more particularly, to a mounting bracket and a mounting assembly of a photovoltaic module.

### BACKGROUND

With the continuous development of new energy technologies, solar energy provides a more convenient energy supply for people. Photovoltaic modules are important components of solar power generation systems.

The Chinese utility model patent having a Granted Publication No. CN201520442598.X discloses a thin-film photovoltaic module, which includes a thin-film photovoltaic module body, a support crossbeam, a bonding layer, and a junction box. The support crossbeam is arranged on the rear side of the thin-film photovoltaic module body by way of the bonding layer. The support crossbeam is provided with at least one module mounting hole. The junction box is arranged on the rear side of the thin-film photovoltaic module body. In this patent, the support crossbeam is arranged on the rear side of the thin-film photovoltaic module body by way of the bonding layer. Using this manner, a bonding substance comes into direct contact with the module body. The bonding substance should be able to withstand high temperature, high humidity and solar exposure. Aging of the bonding substance causes a fact that the bonding substance may peel off from the module body, thereby posing a potential risk of peeling off.

The Chinese utility model patent having a Granted Publication No. CN201620748693.7 provides a bracket structure for quickly fixing a photovoltaic module, which includes a photovoltaic module and a crossbeam for fixing the photovoltaic module. The crossbeam is provided with an elastic steel wire formed by bending. The crossbeam is provided with a hole for fixing the elastic steel wire, one end of the elastic steel wire is embedded into and fixed to the hole of the crossbeam, and the other end thereof is exposed from the hole of the crossbeam. The photovoltaic module is provided with a fixing hole for inserting the elastic steel wire. The part of the elastic steel wire exposed to outside the crossbeam is embedded into the fixing hole, such that the photovoltaic module is fixed to the crossbeam. The photovoltaic module is provided with a fixing hole and the crossbeam is provided with a hole, and an elastic steel wire for fixing the photovoltaic module is provided. In the actual assembly process, the photovoltaic module can be fixed to the crossbeam by inserting the elastic steel wire into the hole of the crossbeam, which is convenient and simple in use and fast in operation, and may better meet actual demands. The bracket structure for quickly fixing a photovoltaic module is simple in design structure and low in production cost, and is easy to be widely used. However, only using the elastic steel wire to fix the photovoltaic module weighing up to 15kg or more, the elastic steel wire may fatigue against long-term wind pressure vibration, and there may be lack of adequate tension to fix the photovoltaic module, which may finally lead to a separation of the photovoltaic module from the bracket.

The Chinese utility model patent having a Granted Publication No. CN201620311208.X discloses a quickly-installed photovoltaic module bracket, and relates to a quickly-installed bracket. A photovoltaic module bracket simple in construction and quick in installation is provided for a flat roof photovoltaic system, which may reduce roof load. The photovoltaic module bracket includes a front strut member, a rear strut member, a pressed compact, and a cement base block, etc. The front strut member and the pressed compact are employed to fix a front end edge of the photovoltaic module, and the rear strut member and the pressed compact are employed to fix a rear end edge of the photovoltaic module. The front strut member includes a mounting portion at one side and an intensifying portion at the other side. The mounting portion is provided with a through hole. The mounting portion and the front end edge of the photovoltaic module are fixed by the pressed compact. The pressed compact is also provided with a through hole. The pressed compact and the mounting portion are connected by a bolt. The pressed compact snaps on the front end edge of the photovoltaic module. The intensifying portion is embedded with the cement base block. The photovoltaic module bracket should use a part to connect a module body to the pressed compact, and should directly contact and drill on the module body by means of locking, which may cause the module to rust and thus may cause a hidden danger of burnout.

### SUMMARY

Embodiments of the present disclosure provide a mounting bracket and a mounting assembly of a photovoltaic module, to prevent the photovoltaic module from being damaged or corroded.

An embodiment of the present disclosure provides a mounting bracket of a photovoltaic module, which includes:
a bracket body;
a vertical plate, whose bottom end is fixed to a top surface of the bracket body; and
a transverse plate, transversely fixed to a top end of the vertical plate. A first sliding groove and a second sliding groove opposite in open direction are formed between the transverse plate, the vertical plate and the bracket body. A depth of the first sliding groove is greater than that of the second sliding groove.

In the aforementioned mounting bracket of the photovoltaic module, alternatively, the transverse plate is parallel to the top surface of the bracket body.

In the aforementioned mounting bracket of the photovoltaic module, alternatively, a bottom board of the bracket body is provided with a fastener for connecting to a building.

In the mounting bracket of the photovoltaic module as mentioned above, alternatively, materials of the bracket body, the vertical plate and the transverse plate are aluminium alloys.

An embodiment of the present disclosure further provides a mounting assembly of a photovoltaic module, which includes at least one photovoltaic module and further includes at least a pair of mounting brackets of the photovoltaic module according to this embodiment of the present disclosure. One end of the photovoltaic module is inserted into the first sliding groove of the mounting bracket, and the other end of the photovoltaic module is inserted into the second sliding groove of the other mounting bracket.

Alternatively, the mounting assembly of the photovoltaic module as mentioned above further includes:
a baffle bar, arranged in the first sliding groove and used for baffling a clearance between the vertical plate and the photovoltaic module.

In the aforementioned mounting assembly of the photovoltaic module, alternatively, the baffle bar is a rubber baffle bar.

In the aforementioned mounting assembly of the photovoltaic module, alternatively, a sectional shape the baffle bar is inverted T-shaped, the baffle bar includes an insertion portion and a baffle portion, the insertion portion is inserted between the vertical plate and the photovoltaic module, and the baffle portion baffles an outside of the first sliding groove.

In the aforementioned mounting assembly of the photovoltaic module, alternatively, two ends of the photovoltaic module are cladded with a separator strip.

In the aforementioned mounting assembly of the photovoltaic module, alternatively, the separator strip is a PVC separator strip.

In the mounting bracket and the mounting assembly of the photovoltaic module provided by the embodiments of the present disclosure, the first sliding groove and the second sliding groove are formed on the bracket body by the transverse plate and the vertical plate, and the photovoltaic module may be directly mounted by way of fitting between the first sliding groove and the second sliding groove and the photovoltaic module. Therefore, compare with the prior art, the mounting time is saved. Furthermore, in the mounting process, it is unnecessary to apply excessive force to the photovoltaic module, and thus fracture of the photovoltaic module may be avoided. Further, with the addition of the position limiting action of the baffle bar, which is utilized to fill a clearance between c photovoltaic module and the first sliding groove, it is convenient to mount the photovoltaic module and the stability of mounting the photovoltaic module is improved.

### BRIEF DESCRIPTION OF THE DRAWING

FIG. 1 is a schematic structural diagram of a mounting bracket of a photovoltaic module according to an embodiment;
FIG. 2 is a structural sectional view of a mounting bracket of a photovoltaic module according to an embodiment;
FIG. 3 is a schematic structural diagram of a baffle bar;
FIG. 4 is a schematic structural diagram of a separator strip; and
FIG. 5 is a structural sectional diagram of the separator strip.

Reference numbers in the attached drawings:
1-bracket body; 2-vertical plate; 3-transverse plate; 4-first sliding groove; 5-second sliding groove; 6-baffle bar; 61-insertion portion 62-baffle portion; 7-bottom board; 8 - separator strip; 81-bottom surface; and 82-side surface.

### DETAILED DESCRIPTION OF THE EMBODIMENTS

Embodiments of the present disclosure are described in detail as below. Examples of the embodiments are as shown in drawings, in which same or similar reference numbers always represent same or similar elements or elements with same or similar functions. The embodiments described below with reference to the drawings are exemplary, just used for explaining the embodiments of the present disclosure, not construed as limiting the embodiments of the present disclosure.

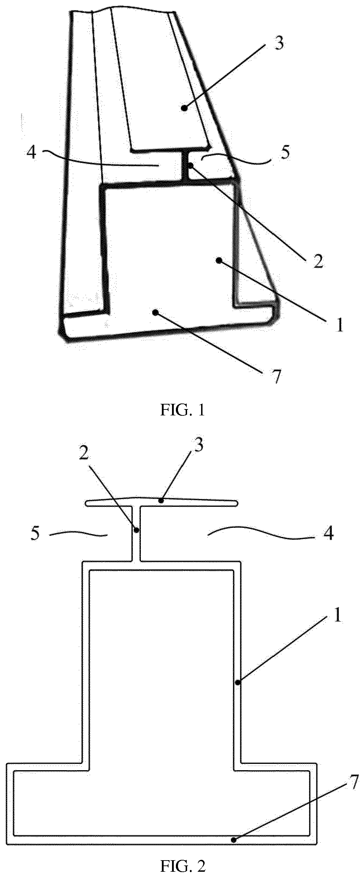

FIG. 1 is a schematic structural diagram of a mounting bracket of a photovoltaic module according to an embodiment, and FIG. 2 is a structural sectional view of the mounting bracket of the photovoltaic module according to an embodiment.

Simultaneously referring to FIG. 1 and FIG. 2, this embodiment provides a mounting bracket of a photovoltaic module, which includes a bracket body 1, a vertical plate 2, and a transverse plate 3.

The bracket body 1 is used for fixing to a building and also providing support for the vertical plate 2. The mounting bracket may be connected to the building by screwing a fastener through a bottom board 7 on the bracket body 1. The bracket body 1 may be made of aluminium alloy in the prior art, and both the vertical plate 2 and the transverse plate 3 may be made of aluminium alloy, such that light weight may be implemented while the strength is guaranteed. The shape of the bracket body 1 may be diversified, which is not specifically limited herein.

Those skilled in the art may understand that the mode of connection between the bracket body 1 and the fixture fixed to the building is the same as that in the prior art. That is, the bracket body 1 may be fixed to the fixture by screwing the fastener through the bracket body 1, and then the fixture is fixed to the building.

The bottom end of the vertical plate 2 is fixed to the top surface of the bracket body 1. The vertical plate 2 may be fixed to the bracket body 1 by welding or in other ways. The top end of the vertical plate 2 is connected to the transverse plate 3, wherein the specific connecting position deviates from the middle position of the transverse plate 3. That is, centering on the vertical plate 2, the transverse plate 3 has different lengths extending to two sides, namely, the transverse plate 3 is asymmetrically arranged. A first sliding groove 4 and a second sliding groove 5 opposite in open direction are formed between the transverse plate 3, the vertical plate 2 and the bracket body 1. A depth of the first sliding groove 4 is greater than that of the second sliding groove 5.

Setting this pair of sliding grooves opposite in open direction is because installation of one photovoltaic module needs a pair of the mounting brackets provided by this embodiment. One end of the photovoltaic module is inserted into the first sliding groove 4 of the mounting bracket, and the other end of the photovoltaic module is inserted into the second sliding groove 5 of the other mounting bracket. One side of the transverse plate 3 is set to be longer whereas the other side of the transverse plate 3 is set to be shorter, wherein the longer side may allow the photovoltaic module to have a large enough angle to obliquely insert, and the shorter side may allow the photovoltaic module to keep stable.

In the mounting bracket of the photovoltaic module provided by an embodiment of the present disclosure, the first sliding groove 4 and the second sliding groove 5 are formed on the bracket body 1 by the transverse plate 3 and the vertical plate 2, and the photovoltaic module may be directly mounted by way of fitting between the first sliding groove 4 and the second sliding groove 5 and the photovoltaic module. Therefore, the mounting time is saved. Furthermore, in the mounting process, it is unnecessary to apply excessive force to the photovoltaic module, and thus fracture of the photovoltaic module may be avoided.

To further improve the installation stability of the photovoltaic module and prevent the photovoltaic module from breaking away from the first sliding groove 4 and the second sliding groove 5, alternatively, the transverse plate 3 is parallel to the top surface of the bracket body 1. The vertical plate 2 is perpendicular to the transverse plate 3 and is connected between the transverse plate 3 and the top surface of the bracket body 1.

An embodiment of the present disclosure further provides a mounting assembly of a photovoltaic module, which includes at least one photovoltaic module, and further includes at least a pair of the mounting brackets of the photovoltaic module according to any one of the preceding embodiments. One end of the photovoltaic module is inserted into the first sliding groove 4 of the mounting bracket, and the other end of the photovoltaic module is inserted into the second sliding groove 5 of the other mounting bracket.

A clearance may be provided between the photovoltaic module and the first sliding groove 4 on the longer side, which may cause looseness of the photovoltaic module. For this reason, a baffle bar 6 is arranged to separate adjacent photovoltaic modules, and stabilize the photovoltaic module, preventing the photovoltaic module from waggling. The baffle bar 6 is arranged in the first sliding groove 4 to baffle the clearance between the photovoltaic modules.

Alternatively, the baffle bar 6 is a rubber baffle bar 6 which has a certain elasticity. The rubber baffle bar 6 can effectively fill the clearance between the photovoltaic module and the first sliding groove 4, and also can prevent the photovoltaic module from collision damage.

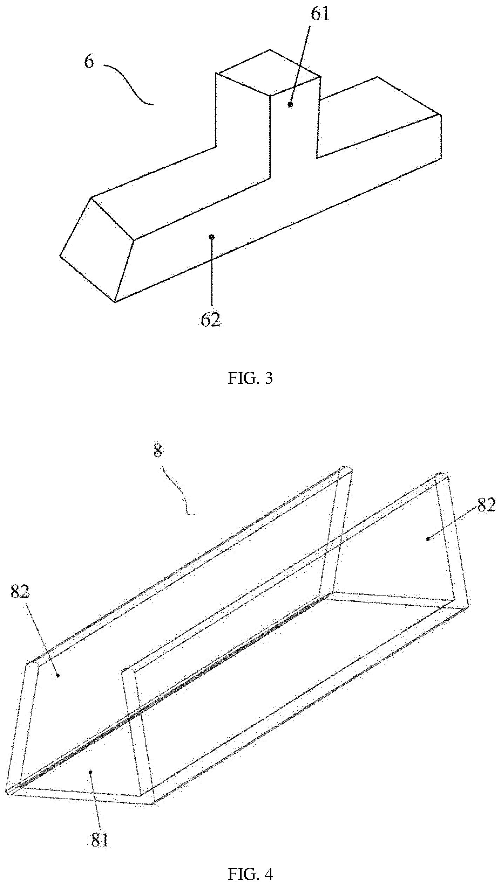

As an alternative structure form, a sectional shape the baffle bar 6 may be inverted T-shaped. FIG. 3 is a schematic structural diagram of the baffle bar. As shown in FIG. 3, the baffle bar 6 includes an insertion portion 61 and a baffle portion 62. The insertion portion 61 is inserted between the vertical plate 2 and the photovoltaic module, and the baffle portion 62 baffles an outside of the first sliding groove 4.

To prevent the photovoltaic module from being damaged due to collision between the photovoltaic module and the mounting bracket, the mounting assembly for supporting the photovoltaic module provided by the embodiment of the present disclosure alternatively further includes a separator strip, which is cladded at two ends of the photovoltaic module and is used for separating the first sliding groove 4 and the second sliding groove 5 from the photovoltaic module, such that direct contact between the metal material of the sliding grooves and glass on the photovoltaic module is avoided, and thus the photovoltaic module is protected. There may be multiple options for the material of the separator strip, as long as the material of the separator strip can separate the photovoltaic module from the first sliding groove 4 and the second sliding groove 5. In this embodiment, the separator strip is a PVC separator strip.

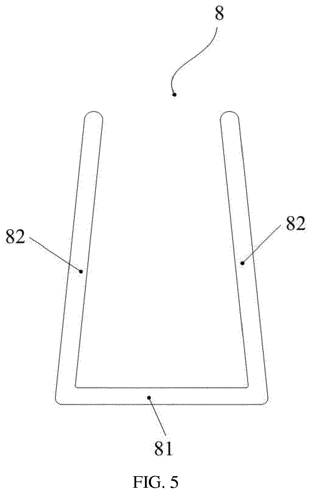

FIG. 4 is a schematic structural diagram of a separator strip, and FIG. 5 is a structural sectional diagram of the separator strip. Alternatively, the separator strip 8 includes a bottom surface 81 and two opposite side surfaces 82, such that the formed section of the separator strip is shaped like an upward-narrowing groove. This narrowing shape can produce a clamping force to the photovoltaic module, such that the mounting reliability of the photovoltaic module is enhanced. Furthermore, the thickness of the separator strip 8 is adjustable to satisfy installation of photovoltaic modules of different sizes and eliminate the accumulated tolerance. Setting of the separator strip 8 also can provide a certain friction force, which makes the installation of the photovoltaic module more labor-saving.

After the PVC separator strips with matched thickness are inserted into the upper side and the lower side of the photovoltaic module, the PVC separator strip is obliquely inserted into the first sliding groove 4 on the longer side of the mounting bracket, the photovoltaic module glides down, such that the underneath of the photovoltaic module goes into the second sliding groove 5 on the shorter side, and then the inverted T-shaped rubber baffle bar 6 is inserted into the first sliding groove 4 on the longer side. In this way, the objective of fastening the photovoltaic module and separating adjacent photovoltaic modules is achieved.

The structure, features and effects of the mounting bracket and the mounting assembly of the photovoltaic module are described above in detail based on the embodiments as shown in the figures, and the above embodiments are merely preferred embodiments of the present disclosure. However, the embodiments of the present disclosure do not limit the scope of implementation according to what is shown in the figures. Any modifications made in accordance with the conception of the embodiments of the present disclosure or equivalent embodiments revised as equivalent changes shall fall within the scope of protection of the present disclosure as long as they are within the specification and the spirit covered by the drawings.

## Claims

1. A mounting bracket of a photovoltaic module, comprising:
a bracket body (1);
a vertical plate (2), whose bottom end is fixed to a top surface of the bracket body (1); and
a transverse plate (3), transversely fixed to a top end of the vertical plate (2), a first sliding groove (4) and a second sliding groove (5) opposite in open direction being formed between the transverse plate (3), the vertical plate (2) and the bracket body (1); and a depth of the first sliding groove (4) being greater than that of the second sliding groove (5).

2. The mounting bracket of the photovoltaic module according to claim 1, wherein the transverse plate (3) is parallel to the top surface of the bracket body (1).

3. The mounting bracket of the photovoltaic module according to claim 1 or 2, wherein a bottom board (7) of the bracket body (1) is provided with a fastener for connecting to a building.

4. The mounting bracket of the photovoltaic module according to claim 1 or 2, wherein materials of the bracket body (1), the vertical plate (2) and the transverse plate (3) are aluminium alloys.

5. A mounting assembly of a photovoltaic module, comprising at least one photovoltaic module, and further comprising at least a pair of mounting brackets of the photovoltaic module according to any one of claims 1-4, wherein one end of the photovoltaic module is inserted into the first sliding groove (4) of the mounting bracket, and another end of the photovoltaic module is inserted into the second sliding groove (5) of another mounting bracket.

6. The mounting assembly of the photovoltaic module according to claim 5, further comprising:
a baffle bar (6), arranged in the first sliding groove (4) and used for baffling a clearance between the vertical plate (2) and the photovoltaic module.

7. The mounting assembly of the photovoltaic module according to claim 6, wherein the baffle bar (6) is a rubber baffle bar.

8. The mounting assembly of the photovoltaic module according to claim 6, wherein a sectional shape the baffle bar (6) is inverted T-shaped, the baffle bar (6) comprises an insertion portion (61) and a baffle portion (62), the insertion portion (61) is inserted between the vertical plate (2) and the photovoltaic module, and the baffle portion (62) baffles an outside of the first sliding groove (4).

9. The mounting assembly of the photovoltaic module according to any one of claims 5-8, wherein two ends of the photovoltaic module are cladded with a separator strip (8).

10. The mounting assembly of the photovoltaic module according to claim 9, wherein the separator strip (8) is a PVC separator strip.
